(19)

Europäisches
Patentamt
European
Patent Office
Office européen
des brevets

(11) **EP 2 966 742 B1**

(12) **EUROPEAN PATENT SPECIFICATION**

(45) Date of publication and mention
of the grant of the patent:
**02.10.2019 Bulletin 2019/40**

(51) Int Cl.:
***H02H 3/06*** *(2006.01)*          ***H02H 7/26*** *(2006.01)*
***H02H 9/04*** *(2006.01)*

(21) Application number: **13876806.4**

(22) Date of filing: **06.03.2013**

(86) International application number:
**PCT/JP2013/056173**

(87) International publication number:
**WO 2014/136229 (12.09.2014 Gazette 2014/37)**

(54) **ELECTRIC POWER CONVERSION DEVICE**

STROMWANDLERVORRICHTUNG

DISPOSITIF DE CONVERSION DE PUISSANCE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.01.2016 Bulletin 2016/02**

(73) Proprietor: **Mitsubishi Electric Corporation
Tokyo 100-8310 (JP)**

(72) Inventors:
- **TAKEDA, Toshinobu
  Tokyo 100-8310 (JP)**
- **ITO, Hiroki
  Tokyo 100-8310 (JP)**
- **KIKUCHI, Kunio
  Tokyo 100-8310 (JP)**

- **KAMEI, Kenji
  Tokyo 100-8310 (JP)**
- **TAHATA, Kazuyori
  Tokyo 100-8310 (JP)**
- **HIRATSUKA, Masaki
  Tokyo 100-8310 (JP)**
- **TOKOYODA, Sho
  Tokyo 100-8310 (JP)**

(74) Representative: **Zech, Stefan Markus
Meissner Bolte Patentanwälte
Rechtsanwälte Partnerschaft mbB
Postfach 86 06 24
81633 München (DE)**

(56) References cited:
**JP-A- H0 469 011     JP-A- H0 568 328
JP-A- H1 098 808     JP-A- 2000 175 451
US-A- 4 689 733**

EP 2 966 742 B1

**Description**

Field

The present invention relates to an electric power conversion device that is applied to a DC power transmission system in which a plurality of power supply systems are connected by a DC line and interconnected with each other.

Background

In a DC power transmission system having a self-exciting converter applied thereto, when an accident in a DC line occurs, an AC circuit breaker on the AC side of the converter trips and the power supply is shut off. After the arc at the accident point is extinguished and the dielectric strength of the arc part recovers, the AC circuit breaker is reset and operation resumes. It is also generally desirable, not only in DC power transmission systems, to reduce the period of time between an accident occurring and the resumption of operations and thus to reduce the power transmission outage time.

For example, a technique for fast restarting to reduce the period of time between an accident occurring and the resumption of operations has been disclosed wherein a circuit breaker is provided so that an accident in a DC line can recover from a grounding accident, with the circuit breaker tripping the DC line to ground and thus the arc at the accident point being forcibly extinguished (for example, Patent Literature 1).

Citation List

Patent Literature

Patent Literature 1: Japanese Patent Application Laid-open No. S59-209016

Summary

Technical Problem

However, in the conventional technique described above, it is necessary to provide a circuit breaker at both ends of the DC line. This means there is a problem in that the system increases in size, the cost increases, and management and operation of the system become more complicated. A disconnecting switch could be used instead of a circuit breaker. However, if a disconnecting switch is used, it is necessary to open the disconnecting switch to resume operation after a current flowing in the disconnecting switch is sufficiently attenuated even when the dielectric strength of an arc part recovers. As a result, there has been a problem in that the period of time until operations are resumed in a configuration using a disconnecting switch is longer than that in a configuration using a circuit breaker.

The present invention has been achieved in view of the above problems, and an objective of the present invention is to provide an electric power conversion device that can reduce the period of time until operations are resumed after the occurrence of an accident while downsizing the system and reducing the cost of a DC power transmission system in which the power supply systems in a plurality of power supply systems are connected by a DC line and interconnected with each other.

Solution to Problem

In order to solve the problem described above and to achieve the objective, the present invention relates to an electric power conversion device that is applied to a DC power transmission system in which a plurality of power supply systems are connected by a DC line and are interconnected with each other. The electric power conversion device includes: a converter performing electric power conversion between the power supply systems and the DC power transmission system; a reactor connected between the converter and the DC line; and an earthing switch unit having a limited current circuit and a disconnecting switch each of which is connected in series with each other, and a switch connected in parallel to the limited current circuit.

Advantageous Effects of Invention

According to the present invention, it is possible to reduce the period of time until operations are resumed after the occurrence of an accident while downsizing the system and reducing the cost in a DC power transmission system in which the power supply systems in a plurality of power supply systems are connected by a DC line and interconnected with each other.

An electric power conversion device having an earthing switch is also disclosed in US4689733.

Brief Description of Drawings

FIG. 1 is a diagram illustrating an example of a configuration of an electric power conversion device according to a first embodiment of the present invention.

FIG. 2 is an explanatory diagram of an example of an operation when a grounding accident occurs in the electric power conversion device according to the first embodiment.

FIG. 3 is a diagram illustrating an example of a two-terminal DC power transmission system having the electric power conversion device according to the first embodiment applied thereto.

FIGS. 4 are diagrams illustrating an example of a multi-line DC power transmission system having the electric power conversion device according to the first embodiment applied thereto.

FIGS. 5 are diagrams illustrating an example of a non-loop multi-terminal DC power transmission system having the electric power conversion device according to the first embodiment applied thereto.

FIGS. 6 are diagrams illustrating an example of a loop multi-terminal DC power transmission system having the electric power conversion device according to the first embodiment applied thereto.

FIG. 7 is a diagram illustrating a modification of a two-terminal DC power transmission system in which a DC line is divided into a plurality of lines.

FIG. 8 is an explanatory diagram of the operational effects of the electric power conversion device according to the first embodiment with the configuration illustrated in FIG. 7.

FIG. 9 is a diagram illustrating an example of a configuration of an electric power conversion device according to a second embodiment of the present invention.

FIG. 10 is an explanatory diagram of an example of an operation when a grounding accident occurs in the electric power conversion device according to the second embodiment.

FIG. 11 is a diagram illustrating an example of a configuration of an electric power conversion device according to a third embodiment of the present invention.

FIG. 12 is an explanatory diagram of an example of an operation when a grounding accident occurs in the electric power conversion device according to the third embodiment.

Description of Embodiments

Exemplary embodiments of an electric power conversion device according to the present invention will be described below in detail with reference to the accompanying drawings. The present invention is not limited to the embodiments.

First embodiment

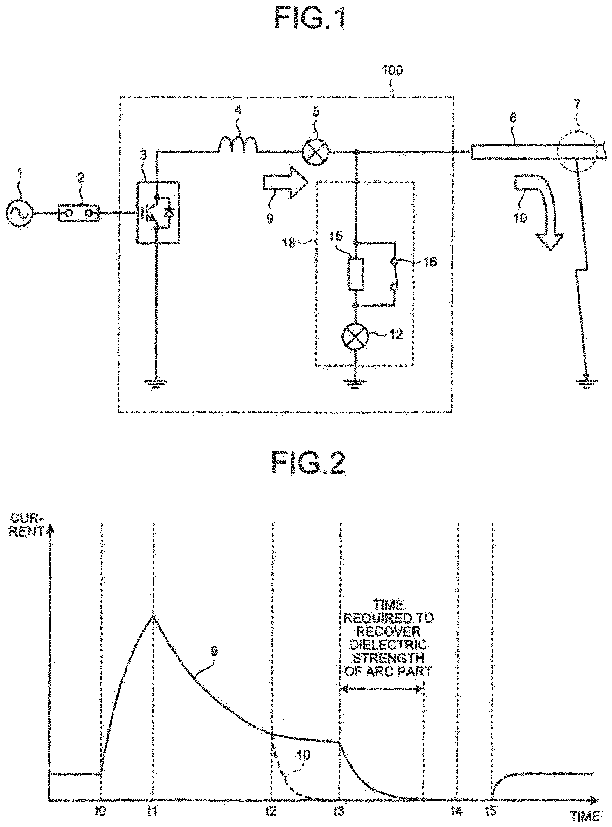

FIG. 1 is a diagram illustrating an example of a configuration of an electric power conversion device according to a first embodiment of the present invention. In the example illustrated in FIG. 1, an electric power conversion device 100 according to the first embodiment is connected between a power supply system 1 and a DC line 6 via a circuit breaker 2.

The electric power conversion device 100 includes a converter 3 that performs electric power conversion between the power supply system 1 and a DC power transmission system including the DC line 6; and a reactor 4 and a disconnecting switch 5 are connected in series with each other between the converter 3 and the DC line 6. In the present embodiment, an earthing switch unit 18 that forcibly extinguishes an arc at an accident point when an accident in the DC line 6 occurs is further provided at an end of the DC line 6.

The earthing switch unit 18 is configured such that a limited current circuit 15 is connected in series with a disconnecting switch 12 and a switch 16 is connected in parallel to the limited current circuit 15.

For example, the limited current circuit 15 is constituted by including at least one of a resistor, a capacitor, a reactor, and a superconducting element.

The limited current circuit 15 has the following function. That is, after an arc current 10 flowing into an accident point (an arc part) 7, where the DC line 6 is grounded and an arc is generated, is forcibly extinguished by the earthing switch unit 18 in which the switch 16 and the disconnecting switch 12 are closed, the limited current circuit 15 then consumes the energy remaining in the reactor 4 by opening the switch 16 and attenuating a current 9 illustrated in FIG. 1.

Note that the example illustrated in FIG. 1 is an example in which the power supply system 1 is an AC electric supply system, the circuit breaker 2 is an AC circuit breaker, and the converter 3 is an AC-DC converter. However, the power supply system 1 can be a DC distributed power supply system or the like such as solar power generator or a power storage element. In such a case, it is perfectly if the circuit breaker 2 is a DC circuit breaker and the converter 3 is a DC-DC converter.

Next, an operation of the earthing switch unit 18 in the electric power conversion device 100 according to the first embodiment is described with reference to FIGS. 1 and 2.

FIG. 2 is an explanatory diagram of an example of an operation when a grounding accident occurs in the electric power conversion device according to the first embodiment. In FIG. 2, the horizontal axis indicates the time and the vertical axis indicates the current. The solid line illustrated in FIG. 2 represents the behavior of the current 9 flowing in the reactor 4, and the broken line illustrated in FIG. 2 represents the behavior of the arc current 10 flowing into the accident point (the arc part) 7.

During a steady operation in which normal DC power transmission is performed, the disconnecting switch 12 is controlled so as to be opened and the switch 16 is controlled so as to be closed.

When a grounding accident occurs in the DC line 6 at a time to illustrated in FIG. 2, the circuit breaker 2 is tripped at a time t1 and the converter 3 is stopped, but a current continues to flow thereafter due to the energy remaining in the reactor 4.

Given that an inductance component of the reactor 4 is denoted by LDCL, a resistance component thereof is denoted by RDCL, an inductance component of a DC line is denoted by LL, a resistance component thereof is denoted by RL, an inductance component of the accident point (the arc part) 7 is denoted by LA, and a resistance component thereof is denoted by RA, then the relative magnitudes of the respective parameters can be represented as follows.

LDCL>>LL>>LA
RA>RDCL
RL>RDCL

In this case, an attenuation time constant $\tau10$ of the arc current 10 that flows after the time t1 can be expressed by the following expression (1).

$$\tau10 = (LDCL + LL + LA)/(RDCL + RL + RA)$$
$$\approx LDCL/(RDCL + RL + RA) \cdots (1)$$

In the present embodiment, by controlling the disconnecting switch 12 so that it is closed after the occurrence of an accident, the disconnecting switch 12 is switched on at a time t2.

An attenuation time constant $\tau10'$ of the arc current 10 that flows after the time t2 and an attenuation time constant $\tau9$ of the current 9 can be expressed by the following expressions (2) and (3), respectively.

$$\tau10' = (LL + LA)/(RL + RA) \approx LL/(RL + RA) \cdots (2)$$

$$\tau9 = (LDCL + LL)/(RDCL + RL)$$
$$\approx LDCL/(RDCL + RL) \cdots (3)$$

With the relations of the respective parameters described above, $\tau10' < \tau10$ is satisfied; and the arc current 10 that flows into the accident point (the arc part) 7 rapidly decreases after the time t2 (the broken line of FIG. 2). Meanwhile, $\tau9 > \tau10$ is satisfied and thus the consumption of the energy remaining in the reactor 4 becomes less than the consumption in the period of time before the time t2.

In a state where energy remains in the reactor 4, even when the dielectric strength of the accident point (the arc part) 7 recovers, it is not possible to resume the operation by opening the disconnecting switch 12. Therefore, in the present embodiment, at a time t3 at which an arc current flowing into the accident point (the arc part) 7 has been extinguished (arc extinction), the switch 16 is controlled so that it is open and thus the current 9 is commutated to the limited current circuit 15 and thus the energy remaining in the reactor 4 is consumed by the limited current circuit 15.

For example, in the present embodiment, assuming that an inductance component of the earthing switch unit 18 is denoted by LG and a resistance component thereof is denoted by RG, the limited current circuit 15 is configured such that the magnitudes of the respective parameters are as follows.

LG<<LDCL
RG>>RA>RDCL

RG>>RL>RDCL

In this case, an attenuation time constant τ9' of the current 9 that flows after the time t3 can be expressed by the following expression (4).

$$\tau 9' = (LDCL + LG)/(RDCL + RG)$$
$$\approx LDCL/(RDCL + RG) \cdots (4)$$

With the relations of the respective parameters described above, τ9'<τ10 is satisfied; and the current 9 rapidly decreases after the time t3 (the solid line of FIG. 2).

After the arc current 10 is extinguished (arc extinction), the time required to recover the dielectric strength of the accident point (the arc part) 7 elapses, and the energy remaining in the reactor 4 is consumed by the limited current circuit 15 at a time t4. At the time t4, the disconnecting switch 12 is controlled such that it is open, the disconnecting switch 5 is controlled such that it is opened and closed, and the circuit breaker 2 is controlled such that it is opened. As a result, at a time t5, the circuit breaker 2 is reset and the operation is resumed. Thereafter, by controlling the switch 16 such that it is closed, the system enters a state of steady operation in which normal DC power transmission is performed.

That is, in the present embodiment, when an accident in the DC line 6 occurs, after power transmission between the power supply system 1 and the converter 3 is interrupted by the circuit breaker 2, the disconnecting switch 12 is switched on first to rapidly extinguish the arc current 10 flowing into the accident point (the arc part) 7 (arc extinction). The switch 16 is then opened so that the energy remaining in the reactor 4 is rapidly consumed by the limited current circuit 15. With such control, the period of time until operations are resumed after the occurrence of an accident can be reduced.

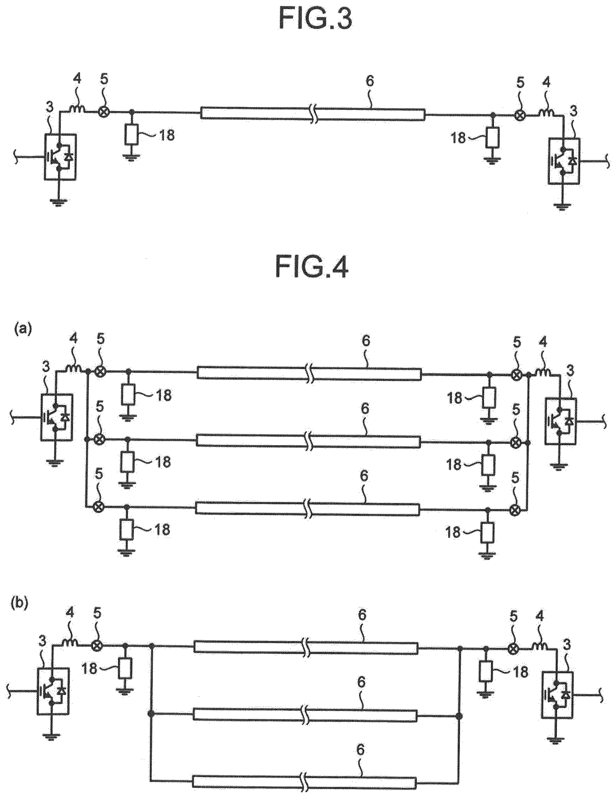

Next, application examples of the electric power conversion device 100 according to the first embodiment are described with reference to FIGS. 3 to 8.

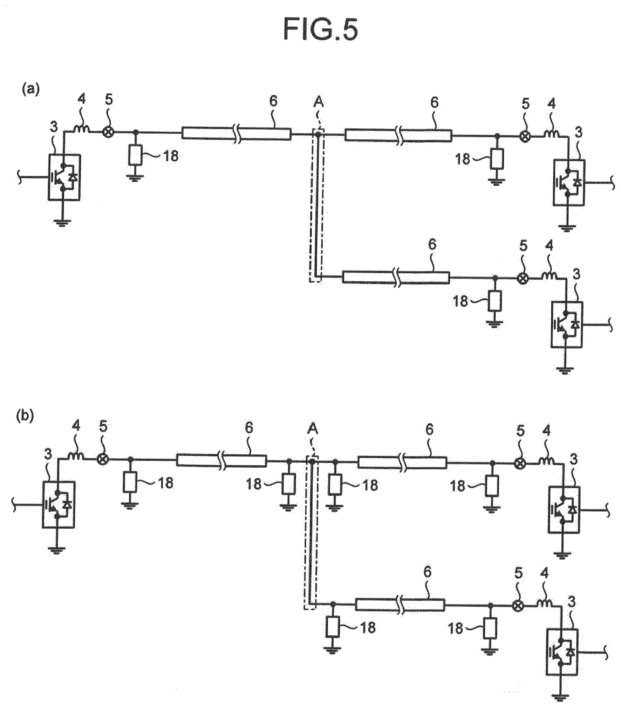

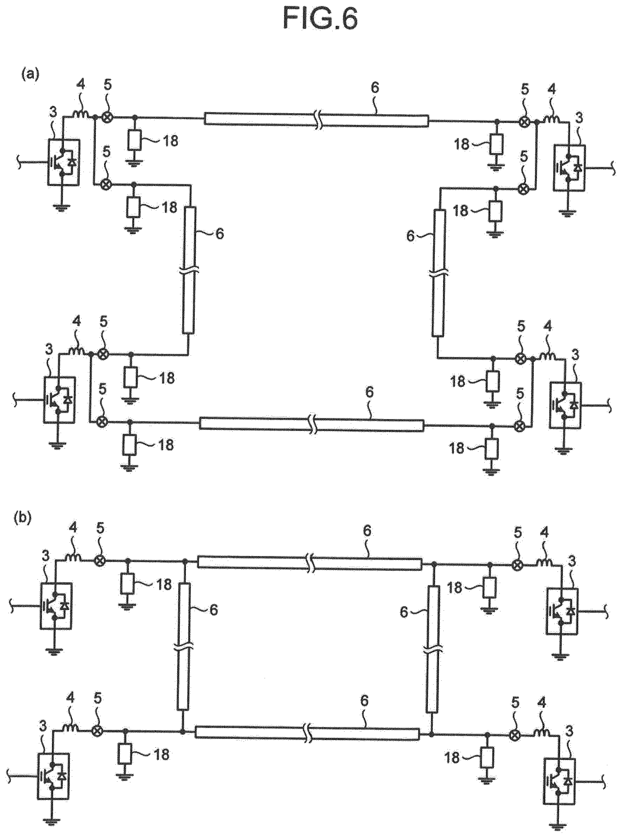

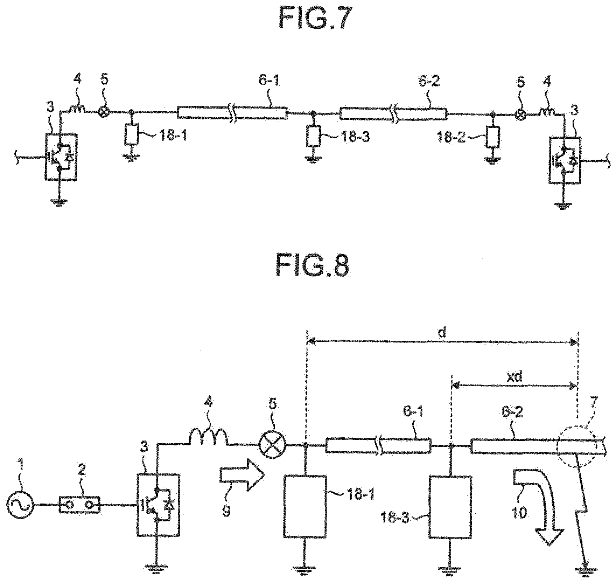

FIG. 3 is a diagram illustrating an example of a two-terminal DC power transmission system that has the electric power conversion device according to the first embodiment applied thereto. FIGS. 4 are diagrams illustrating an example of a multi-line DC power transmission system having the electric power conversion device according to the first embodiment applied thereto. FIGS. 5 are diagrams illustrating an example of a non-loop multi-terminal DC power transmission system having the electric power conversion device according to the first embodiment applied thereto. FIGS. 6 are diagrams illustrating an example of a loop multi-terminal DC power transmission system having the electric power conversion device according to the first embodiment applied thereto. FIG. 7 is a diagram illustrating a modification of a two-terminal DC power transmission system in which a DC line is divided into a plurality of lines. FIG. 8 is an explanatory diagram of the operational effects of the electric power conversion device according to the first embodiment with the configuration illustrated in FIG. 7.

When the electric power conversion device 100 according to the first embodiment is applied to a two-terminal DC power transmission system in which two power supply systems are interconnected with each other by one DC line 6, as illustrated in FIG. 3, it is perfectly if each of the earthing switch units 18 is connected to both ends of the DC line 6; and the respective earthing switch units 18 perform the operation described above.

When the electric power conversion device 100 according to the first embodiment is applied to a multi-line DC power transmission system in which two power supply systems are interconnected with each other by a plurality of the DC lines 6, as illustrated in FIG. 4(a), it may be configured such that each of the earthing switch units 18 is connected to both ends of each of the DC lines 6; or as illustrated in FIG. 4(b), it may be configured such that the earthing switch unit 18 is connected to a connection point of each of the DC lines 6. With the configuration illustrated in FIG. 4(a), when only the earthing switch unit 18 that is connected to the DC line 6 where an accident has occurred performs the operation described above, it is possible to reduce the period for resuming operation after the occurrence of an accident. With the configuration illustrated in FIG. 4(b), effects identical to those illustrated in FIG. 4(a) can be obtained by the earthing switch units 18 of which there are less in number than there are of the DC lines 6.

When the electric power conversion device 100 according to the first embodiment is applied to a non-loop multi-terminal DC power transmission system in which the DC line 6 is branched into a plurality of the DC lines 6 at a branch point A, as illustrated in FIG. 5(a), it may be configured such that each of the earthing switch units 18 is connected to an end of each of the DC lines 6 on the side of the converter 3; or as illustrated in FIG. 5(b), it may be configured, in addition to the configuration illustrated in FIG. 5(a), such that each of the earthing switch units 18 is connected to the branch point A of each of the DC lines 6. With the configuration illustrated in FIG. 5(b), when only the earthing switch unit 18 that is connected to the DC line 6 where an accident has occurred performs the operation described above, it is possible to reduce the period of time until operations are resumed after the occurrence of an accident.

Furthermore, when the electric power conversion device 100 according to the first embodiment is applied to a loop multi-terminal DC power transmission system in which a loop is formed by a plurality of the DC lines 6, as illustrated in FIG. 6(a), it may be configured such that each of the earthing switch units 18 is connected to both ends of each of the DC lines 6; or as illustrated in FIG. 6(b), it may be configured such that each of the earthing switch units 18 is connected to a connection point of each of the DC lines 6. With the configuration illustrated in FIG. 6(a), when only the earthing switch unit 18 that is connected to the DC line 6 where an accident has occurred performs the operation described above, it is possible to reduce the period of time until operations are resumed after the occurrence of an accident. With the configuration illustrated in FIG. 6(b), effects identical to those of FIG. 6(a) can be obtained by the earthing switch units 18 of which there are less in number less than the number of the DC lines 6.

Further, as illustrated in FIG. 7, it may be configured such that a DC line is divided into a plurality of lines 6-1 and 6-2, thereby constituting a two-terminal DC power transmission system; an earthing switch unit 18-1 is connected to an end of the line 6-1 on the side of the converter 3; an earthing switch unit 18-2 is connected to an end of the line 6-2 on the side of the converter 3; and an earthing switch unit 18-3 is connected to a connection point of the respective lines 6-1 and 6-2.

For example, as illustrated in FIG. 8, when an accident occurs in the line 6-2, the arc current 10 flowing into the accident point (the arc part) 7 is attenuated and extinguished by an operation of the earthing switch unit 18-3; and the current 9 that flows due to the energy remaining in the reactor 4 is reduced because the energy remaining in the reactor 4 is consumed by the operation of the earthing switch unit 18-1.

It is assumed that the distance from an end of the line 6-1 having the earthing switch unit 18-1 connected thereto on the side of the converter 3 to the accident point (the arc part) 7 is denoted by d; the length of the line 6-2 in which the arc current 10 flows by switching on the disconnecting switch 12 of the earthing switch unit 18-3 at the time t2 illustrated in FIG. 2 is denoted by xd ($0<x<1$); an inductance component of each of the lines 6-1 and 6-2 per unit length is denoted by LL'; and the resistance component thereof is denoted by RL'. Then, an attenuation time constant $\tau$10-3' of the arc current 10, which flows after the disconnecting switch 12 of the earthing switch unit 18-3 is switched on (the time t2 illustrated in FIG. 2), can be expressed by the following expression (5).

$$\tau 10\text{-}3' = (xdLL' + LA)/(xdRL' + RA)$$
$$\approx xdLL'/(xdRL' + RA) \cdots (5)$$

In this case, when the earthing switch unit 18-3 is not provided, the arc current 10 flowing into the accident point (the arc part) 7 is extinguished by the operation of the earthing switch unit 18-1. In this case, an attenuation time constant $\tau$10-1' of the arc current 10, which flows after the disconnecting switch 12 of the earthing switch unit 18-1 is switched on (the time t2 illustrated in FIG. 2), can be expressed by the following expression (6).

$$\tau 10\text{-}1' = (dLL' + LA)/(dRL' + RA)$$
$$\approx dLL'/(dRL' + RA) \cdots (6)$$

Because it is established that $0<x<1$, $\tau$10-3'<$\tau$10-1' is satisfied by the expressions (5) and (6). That is, as the earthing switch unit 18-3 is provided, attenuation of the arc current 10 that flows after the time t2 of FIG. 2 can be performed more quickly and thus it is possible to further reduce the period of time until operations are resumed after the occurrence of an accident.

The configuration described with reference to FIGS. 7 and 8 can also be applied to the multi-line DC power transmission system described with reference to FIGS. 4; the non-loop multi-terminal DC power transmission system described with reference to FIGS. 5; and the loop multi-terminal DC power transmission system described with reference to FIGS. 6. That is, by dividing each of the DC lines 6 into a plurality of lines and providing the earthing switch unit 18 at a connection point of each of the divided lines, it is possible to further reduce the period of time until operations are resumed after the occurrence of an accident in any of the two-terminal DC power transmission system; the multi-line DC power transmission system; the non-loop multi-terminal DC power transmission system; and the loop multi-terminal DC power transmission system that are described above.

The division number of the DC line 6 may be determined depending on the length of the DC line 6. For example, it is also possible for the length of the respective lines constituting a DC power transmission system to be set to be equal to or less than a fixed length so that the period of time until operations are resumed after the occurrence of an accident can also be set to be equal to or less than a fixed time.

As described above, according to the electric power conversion device of the first embodiment, in a two-terminal DC power transmission system; a non-loop multi-terminal DC power transmission system; and a loop multi-terminal DC power transmission system in which the power supply systems in a plurality of power supply systems are connected by a DC line and interconnected with each other, an earthing switch unit that forcibly extinguishes an arc at an accident point when an accident in a DC line occurs is provided at an end of a DC line; the earthing switch unit is connected in series with a limited current circuit and a disconnecting switch; and a switch is connected in parallel to the limited current circuit. Therefore, during a steady operation in which normal DC power transmission is performed, the disconnecting switch is controlled such that it is open and the switch is controlled such that it is closed. However, when an accident in a DC line occurs, after power transmission between a power supply system and a converter is interrupted by a circuit breaker, the disconnecting switch is switched on first so as to rapidly extinguish an arc current flowing into an accident point (an arc part). Thereafter, the switch is opened, so that the energy remaining in a reactor can be rapidly consumed by the limited current circuit. As a result, it is possible to reduce the period of time until operations are resumed after the occurrence of an accident.

According to the present embodiment, the configuration is such that an earthing switch unit does not include a circuit breaker, and thus the system can be downsized and the cost can be reduced.

Because an arc duration time at an accident point is reduced, damage to the system caused by the arc can be reduced.

Further, by dividing a DC line into a plurality of lines and providing an earthing switch unit at a connection point of each of the divided lines, the time taken to attenuate the arc current can be shortened and thus the period of time until operations are resumed after the occurrence of an accident can be further reduced.

Second embodiment

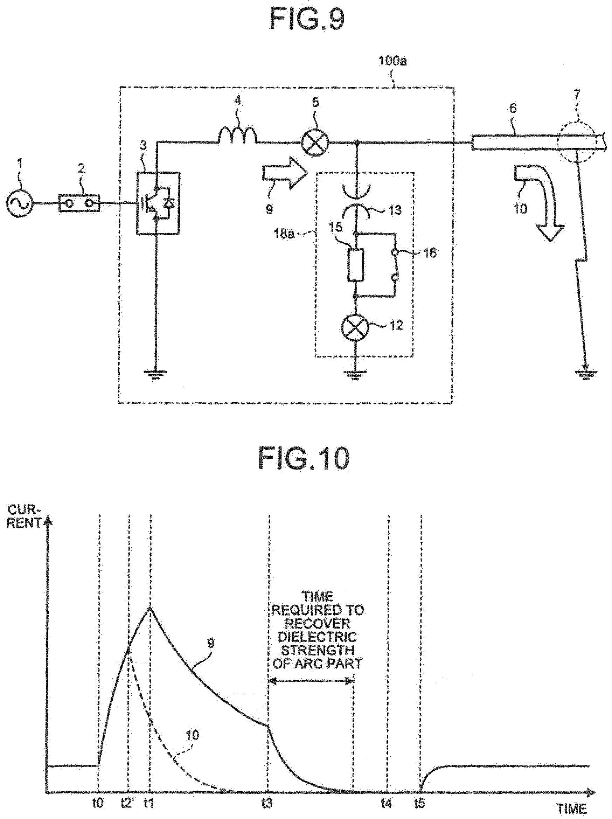

FIG. 9 is a diagram illustrating an example of a configuration of an electric power conversion device according to a second embodiment of the present invention. Constituent elements identical or equivalent to those according to the first embodiment are designated by like reference signs and detailed explanations thereof will be omitted.

In an electric power conversion device 100a according to the second embodiment, an earthing switch unit 18a is configured such that a discharge gap 13, the limited current circuit 15, and the disconnecting switch 12 are connected in series with each other; and the switch 16 is connected in parallel to the limited current circuit 15.

An operating time of the discharge gap 13 is shorter than that of the disconnecting switch 12 that is an element of a mechanical switch element; and thus when energization control is executed on the discharge gap 13, the discharge gap 13 can instantaneously become an energized state. Therefore, in the present embodiment, during a steady operation in which normal DC power transmission is performed, the disconnecting switch 12 is controlled such that it is closed. When an accident occurs, energization control is executed on the discharge gap 13, thereby grounding the DC line 6 and attenuating the arc current 10. As a result, the arc current 10 flowing into the accident point (the arc part) 7 can be extinguished (arc extinction) more rapidly than the first embodiment in which the disconnecting switch 12 is controlled such that it is closed, so that it is possible to further reduce the period of time until operation is resumed after the occurrence of an accident.

Next, an operation of the earthing switch unit 18a in the electric power conversion device 100a according to the second embodiment is described with reference to FIGS. 9 and 10.

FIG. 10 is an explanatory diagram illustrating an example of an operation when a grounding accident occurs in the electric power conversion device according to the second embodiment. In FIG. 10, the horizontal axis indicates the time and the vertical axis indicates the current. A solid line illustrated in FIG. 10 represents the behavior of the current 9 flowing in the reactor 4, and the broken line illustrated in FIG. 10 represents the behavior of the arc current 10 flowing into the accident point (the arc part) 7.

In the present embodiment, during a steady operation in which normal DC power transmission is performed, the disconnecting switch 12 and the switch 16 are both controlled such that they are closed.

When a grounding accident occurs in the DC line 6 at the time t0 illustrated in FIG. 10, energization control is executed on the discharge gap 13, so that the discharge gap 13 becomes an energized state at the time t2'. As a result, after the time t2', the arc current 10 flowing into the accident point (the arc part) 7 rapidly decreases (the broken line of FIG. 10).

After the circuit breaker 2 is opened; the converter 3 is stopped at the time t1; and the arc current 10 flowing into the accident point (the arc part) 7 is extinguished, at a time t3, the switch 16 is controlled such that it is opened and thus the current 9 is made flowed into the limited current circuit 15, so that the energy remaining in the reactor 4 is consumed by the limited current circuit 15.

After the arc current 10 flowing into the accident point (the arc part) 7 is extinguished; a time required to recover the dielectric strength of the accident point (the arc part) 7 elapses; and the energy remaining in the reactor 4 is consumed by the limited current circuit 15, the discharge gap 13 cannot keep the energized state and at the time t4, the disconnecting switch 12 is controlled such that it is opened, the disconnecting switch 5 is controlled such that it is opened and closed, and the circuit breaker 2 is controlled such that it is opened. As a result, at the time t5, the circuit breaker 2 is switched on and the operation is resumed. Thereafter, by controlling the disconnecting switch 12 and the switch 16 such that they are closed, the system becomes a state of a steady operation in which normal DC power transmission is performed.

That is, in the present embodiment, when an accident occurs in the DC line 6, energization control is executed first on the discharge gap 13 to rapidly reduce the arc current 10 that flows into the accident point (the arc part) 7. After power transmission between the power supply system 1 and the converter 3 is interrupted by the circuit breaker 2 and then the arc current 10 flowing into the accident point (the arc part) 7 is extinguished, the switch 16 is opened, so that the energy remaining in the reactor 4 is rapidly consumed by the limited current circuit 15. With such control operation, the arc current 10 flowing into the accident point (the arc part) 7 can be extinguished more rapidly than that done in the first embodiment, and the period of time until the operation is resumed after the occurrence of an accident can be further reduced.

Note that, similarly to the first embodiment, the electric power conversion device 100a according to the present embodiment can also be applied to any of the two-terminal DC power transmission system as illustrated in FIG. 3, the multi-line DC power transmission system as illustrated in FIGS. 4, the non-loop multi-terminal DC power transmission system as illustrated in FIGS. 5, and the loop multi-terminal DC power transmission system as illustrated in FIGS. 6. As described with reference to FIGS. 7 and 8, by dividing the DC line 6 into a plurality of lines and providing the earthing switch unit 18 at a connection point of each of the divided lines, it is possible to further reduce the time period until the operation is resumed after the occurrence of an accident.

As described above, according to the electric power conversion device of the second embodiment, an earthing switch unit is configured such that a discharge gap, a limited current circuit, and a disconnecting switch are connected in series with each other and a switch is connected in parallel to the limited current circuit. Therefore, during a steady operation in which normal DC power transmission is performed, the disconnecting switch and the switch are both controlled such that they are closed. When an accident occurs in a DC line, energization control is executed first on the discharge gap to rapidly reduce an arc current flowing into an accident point (an arc part). As a result, the arc current flowing into the accident point (the arc part) can be extinguished more rapidly than that done in the first embodiment, and the period of time until the operation is resumed after the occurrence of an accident can be further reduced.

Similarly to the first embodiment, it is configured such that an earthing switch unit does not include a circuit breaker, and thus the system can be downsized and the cost can be reduced.

Because an arc duration time at an accident point is further reduced than that in the first embodiment, the damage on the system caused by an arc can be reduced.

Further, similarly to the first embodiment, by dividing a DC line into a plurality of lines and providing an earthing switch unit at a connection point of each of the divided lines, attenuation of an arc current can be further accelerated and thus the period of time until the operation is resumed after the occurrence of an accident can be further reduced.


Third embodiment

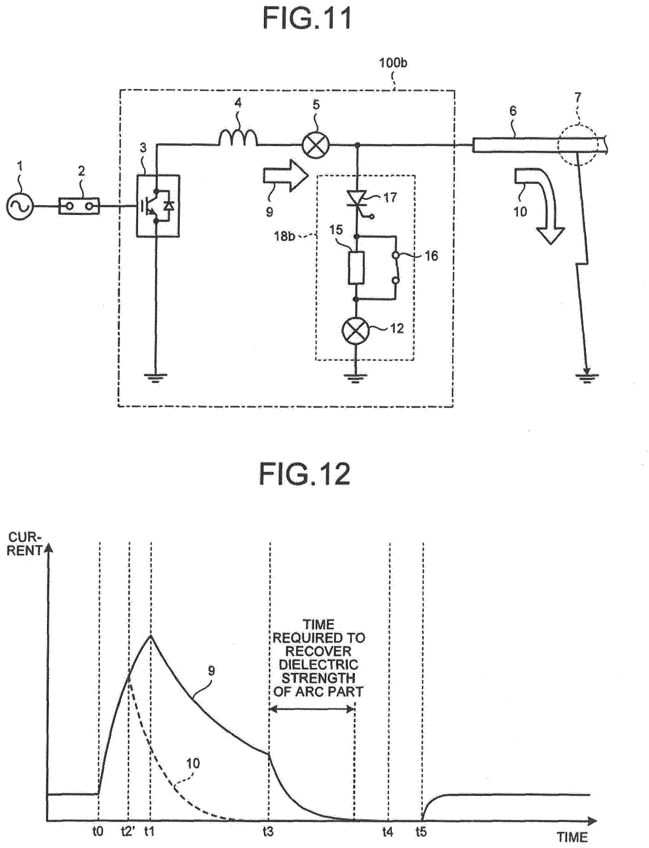

FIG. 11 is a diagram illustrating an example of a configuration of an electric power conversion device according to a third embodiment of the present invention. Constituent elements identical or equivalent to those according to the first embodiment are designated by like reference signs and detailed explanations thereof will be omitted.

In an electric power conversion device 100b according to the third embodiment, an earthing switch unit 18b is configured such that a semiconductor switch element 17, the limited current circuit 15, and the disconnecting switch 12 are connected in series with each other therein and the switch 16 is connected in parallel to the limited current circuit 15.

It can be configured that the semiconductor switch element 17 is, for example, a high-speed operable IGBT (Insulated Gate Bipolar Transistor) or a GCT thyristor (Gate Commutated Turn-off Thyristor).

Due to the configuration described above, similarly to the configuration described in the second embodiment, energization control is executed on the semiconductor switch element 17, so that the semiconductor switch element 17 can instantaneously become into energized state.

Next, an operation of the earthing switch unit 18b in the electric power conversion device 100b according to the third embodiment is described with reference to FIGS. 11 and 12.

FIG. 12 is an explanatory diagram of an example of an operation when a grounding accident occurs in the electric power conversion device according to the third embodiment. In FIG. 12, the horizontal axis indicates the time and the vertical axis indicates the current. A solid line illustrated in FIG. 12 represents the behavior of the current 9 flowing in the reactor 4, and the broken line illustrated in FIG. 12 represents the behavior of the arc current 10 flowing into the accident point (the arc part) 7.

According to the present embodiment, during a steady operation in which normal DC power transmission is performed, the disconnecting switch 12 and the switch 16 are controlled such that both of them are closed and the semiconductor switch element 17 is controlled such that it is non-energized.

When a grounding accident occurs in the DC line 6 at the time to as illustrated in FIG. 12, energization control is executed on the semiconductor switch element 17, so that the semiconductor switch element 17 becomes to be energized state at the time t2'. As a result, after the time t2', the arc current 10 flowing into the accident point (the arc part) 7 rapidly decreases (the broken line of FIG. 12).

After the circuit breaker 2 is opened and the converter 3 is stopped at the time t1 and the arc current 10 flowing into the accident point (the arc part) 7 is extinguished, at the time t3, the switch 16 is controlled such that it is opened and thus the current 9 is commutated to the limited current circuit 15, so that the energy remaining in the reactor 4 is consumed by the limited current circuit 15.

After the arc current 10 flowing into the accident point (the arc part) 7 is extinguished, the time required to recover the dielectric strength of the accident point (the arc part) 7 elapses, and the energy remaining in the reactor 4 is consumed by the limited current circuit 15, the semiconductor switch element 17 is controlled such that it is non-energized, and at the time t4, the disconnecting switch 12 is controlled such that it is opened, the disconnecting switch 5 is controlled such that they are opened and closed, and the circuit breaker 2 is controlled such that it is opened. As a result, at the time t5, the circuit breaker 2 is switched on and the operation is resumed. Thereafter, by controlling the disconnecting switch 12 and the switch 16 such that they are closed, the system becomes a state of a steady operation in which normal DC power transmission is performed.

That is, in the present embodiment, when an accident occurs in the DC line 6, non-energization control is executed first on the semiconductor switch element 17 to rapidly reduce the arc current 10 flowing into the accident point (the arc part) 7. After power transmission between the power supply system 1 and the converter 3 is interrupted by the circuit breaker 2 and then the arc current 10 flowing into the accident point (the arc part) 7 is extinguished, the switch 16 is opened, so that the energy remaining in the reactor 4 is rapidly consumed by the limited current circuit 15. With such control operation, similarly to the second embodiment, the arc current 10 flowing into the accident point (the arc part) 7 can be extinguished more rapidly than that done in the first embodiment, and the period of time until the operation is resumed after the occurrence of an accident can be further reduced.

Note that, similarly to the first embodiment, the electric power conversion device 100b according to the present embodiment can also be applied to any of the two-terminal DC power transmission system illustrated in FIG. 3, the multi-line DC power transmission system illustrated in FIGS. 4, the non-loop multi-terminal DC power transmission system illustrated in FIGS. 5, and the loop multi-terminal DC power transmission system illustrated in FIGS. 6. As described with reference to FIGS. 7 and 8, by dividing the DC line 6 into a plurality of lines and providing the earthing switch unit 18 at a connection point of each of the divided lines, it is possible to further reduce the period of time until the operation is resumed after the occurrence of an accident.

As described above, according to the electric power conversion device of the third embodiment, an earthing switch unit is configured such that a semiconductor switch element, a limited current circuit, and a disconnecting switch are connected in series with each other and a switch is connected in parallel to the limited current circuit. Therefore, during a steady operation in which normal DC power transmission is performed, the disconnecting switch and the switch are both controlled such that they are closed and the semiconductor switch element is controlled such that it is non-energized. When an accident occurs in a DC line, energization control is executed first on the semiconductor switch element to rapidly reduce an arc current flowing into the accident point (an arc part) 7. As a result, similarly to the second embodiment, the arc current flowing into the accident point (the arc part) 7 can be extinguished more rapidly than the first embodiment, and the period for resuming operation after occurrence of an accident can be further reduced.

Furthermore, similarly to the first embodiment, it is configured such that an earthing switch unit does not include a circuit breaker, and thus the system can be downsized and the cost can be reduced.

Further, because an arc duration time at an accident point is further reduced than that done in the first embodiment, damage on the system caused by an arc can be reduced.

Further, similarly to the first embodiment, by dividing a DC line into a plurality of lines and providing an earthing switch unit at a connection point of each of the divided lines, attenuation of an arc current can be further accelerated and thus the period of time until the operation is resumed after the occurrence of an accident can be further reduced.

The configuration of the embodiments described above is only an example of the configuration of the present invention. The configuration can be combined with other well-known techniques, and it is needless to mention that the present invention can be configured while modifying it without departing from the scope of the invention, such as omitting a part from the configuration.

Industrial Applicability

As described above, the electric power conversion device according to the present invention is useful in a DC power transmission system in which a plurality of power supply systems are connected by a DC line and interconnected with each other, and the electric power conversion device is particularly suitable as a technique for reducing the period of time until the operation is resumed after the occurrence of an accident while downsizing the system and reducing the cost.

Reference Signs List

1 power supply system, 2 circuit breaker, 3 converter, 4 reactor, 5 disconnecting switch, 6 DC line, 6-1, 6-2 line, 7 accident point (arc part), 9 current, 10 arc current, 12 disconnecting switch, 13 discharge gap, 15 limited current circuit, 16 switch, 17 semiconductor switch element, 18, 18-1, 18-2, 18-3, 18a, 18b earthing switch unit, 100, 100a, 100b electric power conversion device.

## Claims

1. An electric power conversion device (100) that is applied to a DC power supply and transmission system in which a plurality of power supply systems (1) are connected by a DC line (6) and are interconnected with each other, the electric power conversion device (100) comprising:

   a converter (3) being connected between the power supply systems (1) and the DC line (6) and performing electric power conversion;
   a reactor (4) connected between the converter (3) and the DC line (6);
   **characterised in that** the electric power conversion device further comprises:

   an earthing switch unit (18) having a limited current circuit (15) and a disconnecting switch (12) each of which is connected in series with each other and
   a switch (16) connected in parallel to the limited current circuit (15),
   wherein

   the earthing switch unit (18) is connected at least between the reactor (4) and the DC line (6).

2. The electric power conversion device (100) according to claim 1, wherein in the earthing switch unit (18), when an accident occurs in the DC line (6),
   after power transmission between the power supply system (1) and the converter (3) is interrupted, the disconnecting switch (5) is switched on, after an arc at an accident point is extinguished, the switch (16) is opened, and
   after energy remaining in the reactor (4) is consumed in the limited current circuit (15), the disconnecting switch (5) is opened.

3. An electric power conversion device (100) according to claim 1, wherein the earthing switch unit (18) comprises:
   a discharge gap, being connected in series with the limited current circuit (15) and the disconnection switch (5).

4. The electric power conversion device (100) according to claim 3, wherein in the earthing switch unit (18), when an accident occurs in the DC line (6),
   before power transmission between the power supply system (1) and the converter (3) is interrupted, conduction control is executed on the discharge gap,
   after an arc at an accident point is extinguished, the switch (16) is opened, and
   after energy remaining in the reactor (4) is consumed in the limited current circuit (15), the disconnecting switch (5) is opened.

5. An electric power conversion device (100) according to claim 1, wherein the earthing switch unit (18) comprises:
   a semiconductor switch element being connected in series with the limited current circuit (15) and the disconnecting switch (5).

6. The electric power conversion device (100) according to claim 5, wherein in the earthing switch unit (18), when an accident occurs in the DC line (6),
   before power transmission between the power supply systems (1) and the converter (3) is interrupted, conduction control is executed on the semiconductor switch element,
   after an arc at an accident point is extinguished, the switch (16) is opened, and
   after energy remaining in the reactor (4) is consumed in the limited current circuit (15), the disconnecting switch (5) is opened.

7. The electric power conversion device (100) according to any one of claims 1, 3, and 5, wherein, when the DC lines (6) in a plurality of the DC lines (6) are connected with each other in series or in parallel, the earthing switch unit (18) is further provided at a connection point of each of the DC lines (6).

8. The electric power conversion device (100) according to any one of claims 1, 3, and 5, wherein the limited current circuit (15) includes at least one of a resistor, a capacitor, a reactor (4), and a superconducting element.

**Patentansprüche**

1. Elektroenergieumwandlungsvorrichtung (100), die auf ein Gleichstromenergieversorgungs- und Gleichstromenergieübertragungssystem angewendet wird, in dem mehrere Energieversorgungssysteme (1) mittels einer Gleichstromleitung (6) angeschlossen und miteinander verschaltet sind, wobei die Elektroenergieumwandlungsvorrichtung (100) umfasst:

   einen Wandler (3), der zwischen den Energieversorgungssystemen (1) und der Gleichstromleitung (6) angeschlossen ist und eine Elektroenergieumwandlung durchführt;
   eine Drosselspule (4), die zwischen dem Wandler (3) und der Gleichstromleitung (6) angeschlossen ist;
   **dadurch gekennzeichnet, dass** die Elektroenergieumwandlungsvorrichtung darüber hinaus umfasst:

   eine Erdungsschaltereinheit (18) mit einer Grenzstromschaltung (15) und einem Trennschalter (5), die jeweils miteinander in Reihe geschaltet sind, und
   einen Schalter (16), der mit der Grenzstromschaltung (15) parallelgeschaltet ist,
   wobei
   die Erdungsschaltereinheit (18) zumindest zwischen der Drosselspule (4) und der Gleichstromleitung (6) angeschlossen ist.

2. Elektroenergieumwandlungsvorrichtung (100) nach Anspruch 1, wobei in der Erdungsschaltereinheit (18), wenn eine Störung in der Gleichstromleitung (6) auftritt, nachdem eine Energieübertragung zwischen dem Energieversorgungssystem (1) und dem Wandler (3) unterbrochen wurde, der Trennschalter (5) eingeschaltet wird, nachdem ein Lichtbogen an einem Störungspunkt gelöscht ist, der Schalter (16) geöffnet wird, und nachdem in der Drosselspule (4) verbliebene Energie in der Grenzstromschaltung (15) verbraucht wurde, der Trennschalter (5) geöffnet wird.

3. Elektroenergieumwandlungsvorrichtung (100) nach Anspruch 1, wobei die Erdungsschaltereinheit (18) umfasst:
   einen Entladungsspalt, der mit der Grenzstromschaltung (15) und dem Trennschalter (5) in Reihe geschaltet ist.

4. Elektroenergieumwandlungsvorrichtung (100) nach Anspruch 3, wobei in der Erdungsschaltereinheit (18), wenn eine Störung in der Gleichstromleitung (6) auftritt,
   bevor die Energieübertragung zwischen dem Energieversorgungssystem (1) und dem Wandler (3) unterbrochen wird, eine Leitvermögenskontrolle am Entladungsspalt ausgeführt wird,
   nachdem ein Lichtbogen an einem Störungspunkt gelöscht wurde, der Schalter (16) geöffnet wird, und
   nachdem in der Drosselspule (4) verbliebene Energie in der Grenzstromschaltung (15) verbraucht wurde, der Trennschalter (5) geöffnet wird.

5. Elektroenergieumwandlungsvorrichtung (100) nach Anspruch 1, wobei die Erdungsschaltereinheit (18) umfasst:
   ein Halbleiterschalterelement, das mit der Grenzstromschaltung (15) und dem Trennschalter (5) in Reihe geschaltet ist.

6. Elektroenergieumwandlungsvorrichtung (100) nach Anspruch 5, wobei in der Erdungsschaltereinheit (18), wenn eine Störung in der Gleichstromleitung (6) auftritt,
   bevor die Energieübertragung zwischen den Energieversorgungssystemen (1) und dem Wandler (3) unterbrochen wird, eine Leitvermögenskontrolle am Halbleiterschalterelement ausgeführt wird,
   nachdem ein Lichtbogen an einem Störungspunkt gelöscht wurde, der Schalter (16) geöffnet wird, und
   nachdem in der Drosselspule (4) verbliebene Energie in der Grenzstromschaltung (15) verbraucht wurde, der Trennschalter (5) geöffnet wird.

7. Elektroenergieumwandlungsvorrichtung (100) nach einem der Ansprüche 1, 3 und 5, wobei, wenn die Gleichstromleitungen (6) bei mehreren der Gleichstromleitungen (6) miteinander in Reihe oder parallelgeschaltet sind, die Erdungsschaltereinheit (18) darüber hinaus an einem Verbindungspunkt jeder der Gleichstromleitungen (6) vorgesehen ist.

8.  Elektroenergieumwandlungsvorrichtung (100) nach einem der Ansprüche 1, 3 und 5, wobei die Grenzstromschaltung (15) mindestens eines von einem Widerstand, einem Kondensator, einer Drosselspule (4) und/oder einem supraleitenden Element enthält.

**Revendications**

1.  Dispositif de conversion de puissance électrique (100) qui est appliqué à un système d'alimentation et de transmission de puissance CC dans lequel une pluralité de systèmes d'alimentation en puissance (1) sont connectés par une ligne CC (6) et sont interconnectés les uns aux autres, le dispositif de conversion de puissance électrique (100) comprenant :

    un convertisseur (3) qui est connecté entre les systèmes d'alimentation en puissance (1) et la ligne CC (6) et effectue une conversion de puissance électrique ;
    un élément réactif (4) connecté entre le convertisseur (3) et la ligne CC (6) ;
    **caractérisé en ce que** le dispositif de conversion de puissance électrique comprend en outre :

    une unité de commutateur de mise à la terre (18) comportant un circuit de courant limité (15) et un commutateur de déconnexion (5) dont chacun est connecté en série l'un à l'autre et
    un commutateur (16) connecté en parallèle au circuit de courant limité (15), sachant que
    l'unité de commutateur de mise à la terre (18) est connectée au moins entre l'élément réactif (4) et la ligne CC (6).

2.  Le dispositif de conversion de puissance électrique (100) selon la revendication 1, sachant que dans l'unité de commutateur de mise à la terre (18), lorsqu'un accident survient dans la ligne CC (6),
    après que la transmission de puissance entre le système d'alimentation en puissance (1) et le convertisseur (3) est interrompue, le commutateur de déconnexion (5) se met en marche,
    après qu'un arc au niveau d'un point d'accident est éteint, le commutateur (16) s'ouvre, et
    après que de l'énergie restante dans l'élément réactif (4) est consommée dans le circuit de courant limité (15), le commutateur de déconnexion (5) s'ouvre.

3.  Dispositif de conversion de puissance électrique (100) selon la revendication 1, sachant que l'unité de commutateur de mise à la terre (18) comprend :

    un espace de décharge, qui est connecté en série au circuit de courant limité (15) et au commutateur de déconnexion (5).

4.  Le dispositif de conversion de puissance électrique (100) selon la revendication 3, sachant que dans l'unité de commutateur de mise à la terre (18), lorsqu'un accident survient dans la ligne CC (6),
    avant que la transmission de puissance entre le système d'alimentation en puissance (1) et le convertisseur (3) soit interrompue, une commande de conduction est exécutée sur l'espace de décharge,
    après qu'un arc au niveau d'un point d'accident est éteint, le commutateur (16) s'ouvre, et
    après que de l'énergie restante dans l'élément réactif (4) est consommée dans le circuit de courant limité (15), le commutateur de déconnexion (5) s'ouvre.

5.  Dispositif de conversion de puissance électrique (100) selon la revendication 1, sachant que l'unité de commutateur de mise à la terre (18) comprend :
    un élément de commutateur à semiconducteur qui est connecté en série au circuit de courant limité (15) et au commutateur de déconnexion (5).

6.  Le dispositif de conversion de puissance électrique (100) selon la revendication 5, sachant que dans l'unité de commutateur de mise à la terre (18), lorsqu'un accident survient dans la ligne CC (6),
    avant que la transmission de puissance entre les systèmes d'alimentation en puissance (1) et le convertisseur (3) soit interrompue, une commande de conduction est exécutée sur l'élément de commutateur à semiconducteur,
    après qu'un arc au niveau d'un point d'accident est éteint, le commutateur (16) s'ouvre, et
    après que de l'énergie restante dans l'élément réactif (4) est consommée dans le circuit de courant limité (15), le commutateur de déconnexion (5) s'ouvre.

**7.** Le dispositif de conversion de puissance électrique (100) selon l'une quelconque des revendications 1, 3, et 5, sachant que, lorsque les lignes CC (6) dans une pluralité des lignes CC (6) sont connectées les unes aux autres en série ou en parallèle, l'unité de commutateur de mise à la terre (18) est en outre prévu au niveau d'un point de connexion de chacune des lignes CC (6).

**8.** Le dispositif de conversion de puissance électrique (100) selon l'une quelconque des revendications 1, 3, et 5, sachant que le circuit de courant limité (15) inclut au moins l'un d'une résistance, d'un condensateur, d'un élément réactif (4), et d'un élément supraconducteur.

# FIG.1

# FIG.2

# FIG.3

# FIG.4

(a)

(b)

# FIG.5

# FIG.6

(a)

(b)

# FIG.7

# FIG.8

# FIG.9

# FIG.10

# FIG.11

# FIG.12

**EP 2 966 742 B1**

**REFERENCES CITED IN THE DESCRIPTION**

**Patent documents cited in the description**

- JP S59209016 B

- US 4689733 A